(19) Europäisches Patentamt
European Patent Office
Office européen des brevets

(11) EP 3 211 582 A1

(12) EUROPEAN PATENT APPLICATION
published in accordance with Art. 153(4) EPC

(43) Date of publication:
30.08.2017 Bulletin 2017/35

(51) Int Cl.:
G06Q 30/02 (2012.01)

(21) Application number: 15853126.9

(22) Date of filing: 24.06.2015

(86) International application number:
PCT/KR2015/006457

(87) International publication number:
WO 2016/064066 (28.04.2016 Gazette 2016/17)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 20.10.2014 KR 20140141970

(71) Applicants:
• Seo, Hyung Won
Seoul 143-864 (KR)
• Seo, Yun Jung
Seoul 143-858 (KR)
• Seo, Ye Rim
Seoul 143-858 (KR)

(72) Inventors:
• Seo, Hyung Won
Seoul 143-864 (KR)
• Seo, Yun Jung
Seoul 143-858 (KR)
• Seo, Ye Rim
Seoul 143-858 (KR)

(74) Representative: Zardi, Marco
M. Zardi & Co. SA
Via Pioda 6
6900 Lugano (CH)

(54) CASH PAYMENT LINKING METHOD USING ACCUMULATION OF DOUBLE SALES MARGIN, AND LINKING SYSTEM THEREOF

(57) Disclosed are a double deozoom margin management method and a system for performing the same, which increase mutual sales among a corresponding business owner's own business and rival businesses or among heterogeneous businesses via cross promotion and sales support among heterogeneous businesses or homogeneous businesses. The double deozoom margin management system includes a web server, a deozoom margin accumulation server, and a purchase service provision server. The deozoom margin accumulation server enables deozoom margins to be accumulated among deozoom designated shops. The purchase service provision server: (i) identifies an identification code of a corresponding designated shop when a general purchase has been requested; (ii) issues and accumulates a previously agreed deozoom margin; (iii), stores a deozoom margin of a purchaser and also stores a deozoom margin for settlement when an offline purchase via a point card has been requested; and (iv) does subtraction from a deozoom margin of a member.

FIG. 2

EP 3 211 582 A1

## Description

**Technical Field**

The present invention relates to a cash payment linking method based on the accumulation of a double sales margin and a system for performing the same, and more particularly to a method and system that return double (although "n-time" is described or illustrated in the specification and drawings, a description will be given based on "double" in embodiments of the invention) sales margins (sales commissions) to purchasers in order to boost mutual sales among a corresponding business owner's own business and rival businesses or among heterogeneous businesses via cross promotion and sales support among heterogeneous businesses or homogeneous businesses.

**Background Art**

With the rapid spread of the Internet, a marketing system using the Internet has emerged as a new technique. Recently, there has been a boom in social commerce marketing using the Internet. In this case, social commerce is a term that refers to electronic commerce that is performed via social network service (SNS). Via social commerce, business owners can easily and rapidly attract customers through the issuance of coupons, the hosting of events, etc., and customers can purchase and use eating-out products, IT devices, beauty or skin care coupons, etc. cheaply than usual. Accordingly, social commerce is a field that is growing most rapidly.

When a purchaser purchases products by using Internet social commerce, the purchaser connects with a plurality of websites, for example, Ticket Monster (www.ticketmonster.co.kr), Coupang (www.coupang.com), etc., performs joining of membership and login, selects products for purchase, and performs payment procedures, thereby finally purchasing merchandise coupons.

Various problems arise in that in order to use purchased merchandise coupons, the inconvenience of needing to make reservations occurs in the case of restaurants, it is difficult to make reservations on desired dates due to a reservation concentration phenomenon in the case of service products, the rights of consumers may be infringed because requests for cancellation and refund made due to the above inconvenience are rejected, and the use of merchandise coupons itself becomes impossible due to the insolvency of businesses.

Furthermore, a conventional accumulation system for social commerce marketing corresponds to a method for accumulating bonus points corresponding to a predetermined price of the sales of its own shop. Purchasers do not use such bonus points within validity periods due to their extremely small accumulation rate, and thus a problem arises in that the bonus points are finally turned into the profits of an operating company. Furthermore, it is inconvenient to use bonus points due to the limitation in which the bonus points must be used by a predetermined amount unit. Moreover, the dissatisfaction of purchasers is great due to the system problem of inducing an increase in the probability of the extinction of leftover bonus points.

Furthermore, it cannot be imagined that an inter-rival business collaborative system is used as a system for accumulating bonus points for its own customers. A problem arises in that a bonus point accumulation-based marketing effect against costs is limitative. In the case where such cumulative bonus points are operated, when excessive concentrated trades occur, a fund for supporting these trades is always required. If such a fund cannot be raised, a serious situation, such as the bankruptcy of a company, may occur.

Moreover, a reverse-point management method using the Internet and a system for performing the same, which were filed by the present applicant and were registered (as Korean Patent No. 10-1243971), have difficulty in being applied to a large number of products having different sales prices and different margin rates.

(Prior Art Documents)

1. Korean Patent Application Publication No. 2011-0003903 (the title of the invention: Differential Point Accumulation Service System and Provision Method)
2. Korean Patent Application Publication No. 2009-0137349 (the title of the invention: Advance Point Payment System and Method)
3. Korean Patent Application Publication No. 2004-0082146 (the title of the invention: Base for Life-based Exclusive Inter-business Collaborative Coupon/Point Accumulation System and Method for operating Same)
4. Korean Patent No. 10-0840347 (the title of the invention: Credit Card Service System and Method using Cumulative bonus points)
5. Korean Patent No. 10-0768747 (the title of the invention: Advance Discount Service System and Method using Cyber Points)

6. Korean Patent No. 10-0915668 (the title of the invention: Exchange of Work-based Point Distribution Service Method and Apparatus via Network)

7. Korean Patent No. 10-1243971 (the title of the invention: Reverse-point Management Method using Internet and System for Performing the Same)

## Disclosure

### Technical Problem

Accordingly, the technical problem of the present invention is to overcome the above-described problems of the conventional art, and an object of the present invention is to provide a method that can overcome problems occurring for an advertiser and purchasers in social commerce and that can compensate for the problems of the conventional margin accumulation systems, based on the needs in which there is a need for an operating system for eliminating inconvenience in product trades even when an operating company does not raise a fund, there is a need for the provision of a calculation method for treating cumulative bonus points the same as cash values, there is an urgent need for the development of a system interchangeably applicable to the case where the prices of products or business commissions are different, there is a need to accumulate the sales commissions of online vendors and the business commissions of a deozoom system operating company, to be received from offline deozoom designated shops, for purchasers whenever the purchasers purchase products and to enable the customers to freely purchase products at nationwide online sites and offline deozoom designated shops by using the cumulative margins, and there is a need for universal cumulative points (virtual money scores) that enable individual single customer groups at nationwide offline designated shops and online sites of various business types to be combined into a large-sized customer group.

Furthermore, another object of the present invention is to provide a system for performing the method for managing the accumulation of double sales commissions.

Moreover, still another object of the present invention is to provide a system for performing various accumulation and usage methods in the system for performing the method for managing the accumulation of a double sales commission.

### Technical Solution

In order to accomplish the above objects, according to one embodiment, there is provided a cash payment linking method based on the accumulation of a double sales margin, the cash payment method including:

when a general purchase has been requested, identifying a sales commission rate agreed among a plurality of deozoom designated shops and an n-time deozoom system operating company in advance, wherein the deozoom designated shops are designated shops that have agreed that n-time deozoom margins are accumulated and designated products can be purchased using the deozoom margins among them and that have been each designated to monopolistically use a double deozoom system within an identical business area;

identifying, by a deozoom margin management module, the identification code of a corresponding deozoom designated shop, and then issuing and accumulating, by the deozoom margin management module, a deozoom margin when a product has been purchased;

when a deozoom margin purchase has been requested, doing, by the deozoom margin management module, subtraction from a deozoom margin of a member when the product has been purchased;

wherein the double deozoom margin of the purchaser is calculated and accumulated according to Equation 1;

wherein cumulative deozoom points are exchanged with cash at a one-to-one exchange rate upon cash payment;

wherein the cumulative deozoom points are converted into cash at a two-to-one conversion rate when the cumulative deozoom points are converted into cash and then returned to each vendor;

wherein a loss of each vendor is compensated for by using a payment commission of a deozoom system operating company; and

wherein an upper limit for deozoom points that can be used when the purchaser makes one payment is determined according to Equation 2, and there is no accumulation when payment is made using deozoom points:

$$P = A*B*2 \ ---------------- \ \text{Equation 1}$$

the upper limit for deozoom points available for each payment: within $P = A*B*2$ = calculated value-Equation 2 (where A, B, and P are a purchase price, a sales commission, and a double deozoom-margin to be accumulated, respectively).

In an embodiment, the deozoom margin to be accumulated is calculated according to P = A*B*2 (where A, B, and P are the purchase price, the sales commission, and the double deozoom-margin to be accumulated, respectively).

In an embodiment, the cash payment linking method may further include, when a deozoom margin sales settlement date has been reached, calculating, by the purchase service provision server, the deozoom margin sales amount of the deozoom designated shop in conjunction with a deozoom management module, and transferring, by the purchase service provision server, the deozoom margin sales amount to the corresponding deozoom designated shop in conjunction with the deozoom management module.

In an embodiment, the cash payment linking method may further include making, by the purchase service provision server, an inquiry about a cumulative deozoom margin in conjunction with a member refund management module, and transferring, by the purchase service provision server, the unused cumulative deozoom margin of the purchaser to an account of the purchaser in conjunction with the member refund management module. In an embodiment, the inquiry about the cumulative deozoom margin may be made in response to a request from the purchaser, and the inquiry about the cumulative deozoom margin may be made when a set settlement date has been reached.

In an embodiment, issuing and accumulating, by the purchase service provision server, the deozoom margin at an agreed sales commission rate when the product has been purchased may include: when a product purchase has been requested, displaying a product selection window for a purchase of a product for each category on a screen of the corresponding purchaser terminal; when a specific product has been clicked in the product selection window, displaying detailed information of the product on the screen of the corresponding purchaser terminal, and displaying a deozoom margin, possessed by the member, on the screen of the corresponding purchaser terminal; displaying a payment input window on the screen of the corresponding purchaser terminal; and, when a payment has been completed, accumulating the deozoom margin of the member, and displaying an accumulation checking window on the screen of the corresponding purchaser terminal.

In an embodiment, doing the subtraction from the deozoom margin may include: when a deozoom margin product purchase is requested, displaying an input window, used for input of additional information regarding a deozoom margin purchase product, on the screen of the corresponding purchaser terminal; when a specific product has been clicked in the input window, displaying a payment input window on the screen of the corresponding purchaser terminal; and, when payment has been completed, doing subtraction from the deozoom margin of the member.

In an embodiment, the cash payment linking method may further include, when the payment has been completed, storing, by the deozoom management module, the deozoom margin of a designated sales shop corresponding to a cumulative deozoom margin.

In order to accomplish another object of the present invention, according to one embodiment, there is provided a cash payment linking system based on the accumulation of a double sales margin, the cash payment system including:

> a web server connected to an Internet;
> a deozoom margin accumulation server configured to accumulate deozoom margins among deozoom designated shops, wherein the deozoom designated shops are designated shops that have agreed that deozoom margins are accumulated and designated products can be purchased by using the deozoom margins among them and that have joined as members in order to pursue cross promotion and increases in sales among the deozoom designated shops; and
> a purchase service provision server configured to:

>> (i) when a general purchase has been requested, identify the code of a corresponding designated shop or the identification code of a product from a per-member database, stored via a member management module, in conjunction with the deozoom margin accumulation server;
>> (ii) when the product has been purchased, issue and accumulate a previously agreed deozoom margin;
>> (iii) when an offline purchase via a point card has been requested, store a deozoom margin of a purchaser, and store a deozoom margin for settlement for the deozoom designated shop; and
>> (iv) when a deozoom margin purchase has been requested, do subtraction from a deozoom margin of a member after the product has been purchased;

> wherein the double deozoom margin of the purchaser is calculated and accumulated according to Equation 1;
> wherein cumulative deozoom points are exchanged with cash at a one-to-one exchange rate upon cash payment;
> wherein the cumulative deozoom points are converted into cash at a two-to-one conversion rate when the cumulative deozoom points are converted into cash and then returned to each vendor;
> wherein a loss of each vendor is compensated for by using a payment commission of a deozoom system operating company; and
> wherein an upper limit for deozoom points that can be used when the purchaser makes one payment is determined according to Equation 2, and there is no accumulation when payment is made using deozoom points:

$$P = A*B*2 \quad ---------------- \quad \text{Equation 1}$$

(where A, B and P are a purchase price, a sales commission, and a double deozoom-margin to be accumulated, respectively)

the upper limit for deozoom points available for each payment: within P = A*B*2 = calculated value-Equation 2.

In an embodiment, the purchase service provision server, when a deozoom margin sales settlement date has been reached, may calculate a deozoom margin sales amount of the deozoom designated shop and transfers the deozoom margin sales amount to the corresponding deozoom designated shop.

In an embodiment, the purchase service provision server may make an inquiry about a cumulative deozoom margin, and may transfer the unused cumulative deozoom margin of the purchaser to an account of the purchaser.

In an embodiment, the deozoom margin accumulation server may include a member management module configured to organize personal information of a member, having joined as a member via the web server, into a database for each member and store and manage this database in conjunction with the purchase service provision server.

In an embodiment, the deozoom margin accumulation server may include a deozoom margin management module configured to organize margin information regarding the deozoom margin accumulation for products into a database for each online or offline deozoom designated shop and store and manage this database in conjunction with the purchase service provision server.

In an embodiment, the deozoom margin accumulation server may include a product management module configured to organize sales information regarding products into a database for each online or offline deozoom designated shop and store and manage this database in conjunction with the purchase service provision server.

In an embodiment, the deozoom margin accumulation server may include a designated shop management module configured to designate any one of deozoom designated shops for each online/offline field, for each business, for each item, for each price, or for each area for deozoom margin accumulation and manage the designation.

In an embodiment, the deozoom margin accumulation server may include a product management module configured to perform a function of registering, modifying, and deleting information about products that are being sold at deozoom designated shops.

In an embodiment, the deozoom margin accumulation server may include a deozoom margin management module configured to enable a margin corresponding to a sales commission to be accumulated and enable the double of a remaining margin to be paid upon margin payment.

**Advantageous Effects**

According to the double deozoom margin management method and the system for performing the same, which are operated to enable double sales margins to be accumulated, so that there is no inconvenience in product trades even when an operating company does not raise a fund, the convenience of consumers is improved by a calculation method for treating cumulative bonus points the same as cash values, and the sales commissions of online vendors and the business commissions of a deozoom system operating company, to be received from offline deozoom designated shops, are accumulated for purchasers whenever the purchasers purchase products and the customers can freely purchase products at nationwide online sites and offline deozoom designated shops by using the cumulative margins. Double deozoom margins available at nationwide offline designated shops and online sites of various business types are accumulated, and thus individual single customer groups are combined into a large-sized customer group, thereby providing the effects of maximizing a promotion effect and compensating for problems occurring for an advertiser and purchasers in social commerce and the problems of the conventional margin accumulation systems. In the circumstances in which Amazon.com in U.S. is dominating the worldwide online market in such a way as to take extremely small part of a sales margin as its profit and return the remainder to a purchaser and Alibaba.com in China is surpassing Amazon.com by using a no margin price policy this year, the present system utilizes a no margin policy and returns double sales commissions (or double business commissions) both in an online market and at offline shops and can be operated based on this scheme, and thus the present system can reorganize a worldwide online/offline distribution markets while surpassing Amazon.com and Alibaba.com limited to online and a no margin price policy.

Furthermore, many problems of social commerce and the conventional margin accumulation systems can be solved, a system for mutual aid other than competition can be constructed among homogeneous and heterogeneous designated businesses, purchasers can make economic planed purchases by acquiring information, disclosed over the Internet, in advance, and a synergistic payment effect can be generated among providers and purchasers through expanded application to all fields, such as diagnosis and treatment in hospitals, etc.

Furthermore, customers can be mutually attracted among competing businesses or heterogeneous businesses, and thus business operators can reduce increasing advertising expenses or cutthroat competitions for survival in a rapidly changing global economic environment and a worsening management environment including competitive relationships, a long-term economic recession, etc.

Furthermore, consumers may have suffered from losses upon purchasing due to sharp consumer price rises and reductions in quality attributable to excessive competitions among businesses. According to the present invention, the present invention enables consumers to perform stable, planned purchase activities compared to the conventional low-margin accumulation systems and social commerce causing various problems due to its structural limitations, and thus profits can be realized for both business operators and consumers.

Moreover, the present invention enables double sales margins to be accumulated and cumulative bonus points can be used for trades, and thus the cumulative bonus points are treated the same as cash values, thereby providing the advantage of facilitating calculation. An operating company holds commissions for initial transaction amounts without change, and thus a deficit does not occur, thereby providing the effect of making it unnecessary to raise an excessive fund. The present system can be applied to both online and offline environments. Accordingly, a true no margin-based global distribution system can be constructed, and an optimum distribution system applicable not only to consumer goods but also a plant field can be realized.

## Description of Drawings

FIG. 1 is a diagram illustrating the configuration of a double deozoom margin management system according to an embodiment of the present invention;

FIG. 2 is a block diagram illustrating the double deozoom margin management system shown in FIG. 1;

FIG. 3 is a flowchart illustrating a deozoom margin management method according to an embodiment of the present invention;

FIG. 4 is a diagram illustrating examples of the accumulation of a deozoom margin, the use of a deozoom margin for payment, and settlement for a designated shop;

FIG. 5 is a flowchart illustrating the step of issuing and accumulating a deozoom margin when the sale of a product shown in FIG. 3 is made;

FIG. 6 is a flowchart illustrating the step of doing subtraction from a deozoom margin when the sale of a product shown in FIG. 3 is made; and

FIG. 7 is a process diagram illustrating the development of changes in the scale of a market attributable to a deozoom margin management method according to the present invention.

## Mode for Invention

The present invention will be described in detail with reference to the accompanying diagrams below. The present invention may be subjected to various modifications, and may have various forms. Specific embodiments will be illustrated in the drawings, and will be described in detail in the following description. However, it should be understood that the illustration and the description are not intended to limit the present invention to the specific exemplary formed, but the present invention includes all modifications, equivalents and substitutions included within the spirit and technical range of the present invention.

Although the terms "first, second, etc." may be used to describe various components, these components should not be limited by these terms. These terms are each used merely to distinguish one component from other elements. For example, a first component may be referred to as a second component and also the second component may be referred to as the first component without departing from the scope of the invention. Singular expressions include plural expressions unless specified otherwise in the context thereof.

In this specification, the terms "comprise," "have," etc. are intended to denote the presence of described features, numbers, steps, operations, components, parts, or combinations thereof, but do not exclude the probability of presence or addition of one or more other features, numbers, steps, operations, components, parts, or combinations thereof.

Unless otherwise defined, all terms used herein, including technical or scientific terms, have the same meanings as understood by those having ordinary knowledge in the technical field to which the present invention pertains. The terms commonly used and defined in dictionaries should be interpreted as having meanings identical to those specified in the context of related technology. Unless definitely defined in the present application, the terms should not be interpreted as having ideal or excessively formative meanings.

First, the term <deozoom margin> described throughout the following detailed description and the attached claims refers to a cumulative margin corresponding to a predetermined multiple of a sales commission (a business commission) based on a purchase of a product of a business designated in advance in the system of the present invention.

For example, a double deozoom margin refers to a cumulative margin corresponding to the double of a sales commission, a triple deozoom margin refers to a cumulative margin corresponding to the triple of a sales commission, and an n-time deozoom margin refers to a cumulative margin corresponding to the n-th multiple of a sales commission.

A deozoom margin adapted to purchase a product that is sold by another rival homogeneous business or another heterogeneous business and has a different sales commission may be accumulated and provided for a purchaser of a corresponding business owner's own product. Accordingly, a system for turning a corresponding business owner's own customer into a customer of another business designated as a deozoom system business in advance (because there is almost no customer who extinguishes a large free deozoom margin that can be used to purchase daily necessities) is employed, and thus a common customer group may be formed among <nationwide deozoom system-designated businesses>.

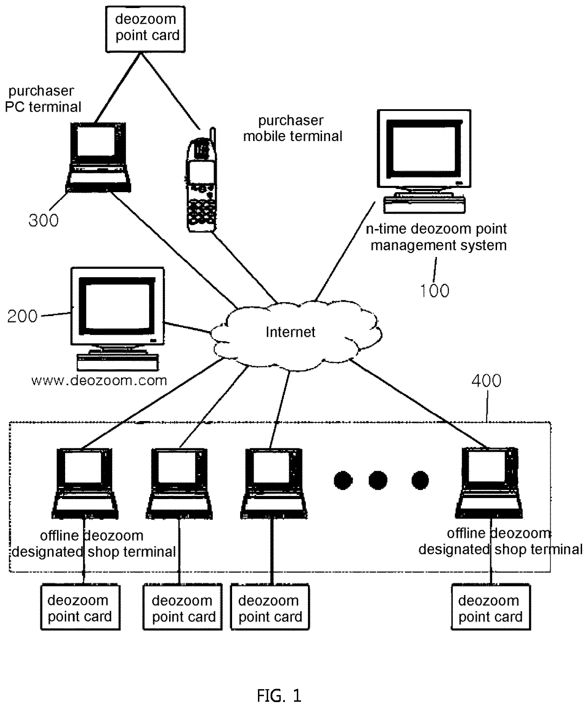

FIG. 1 is a diagram illustrating the overall configuration of a double deozoom margin management system according to an embodiment of the present invention.

Referring to FIG. 1, the double deozoom margin management system 100 according to an embodiment of the present invention is connected to a single online shopping mall 200, at least one purchaser terminal 300, and an affiliate shop terminal part 400 over the Internet.

The double deozoom margin management system 100 is connected to the online shopping mall 200 and the purchaser terminal 300 over the Internet, and also performs the function of providing a product window, via which a purchaser can purchase a product by using a purchaser-owned deozoom margin when purchasing the product, in response to a request from the purchaser.

The purchaser terminal 300 is connected to the double deozoom margin management system 100 over the Internet, and is provided with a common web browser so that web pages, such as various types of hyper text markup language (HTML) documents, etc., provided by the double deozoom margin management system 100 can be fetched and displayed on a screen.

Although the purchaser terminal 300 is preferably implemented using a personal computer (PC), the purchaser terminal 300 is not limited thereto, but may be implemented using any device having a communication function, such as a notebook, a PDA, a smartphone, or the like, which can connect to the Internet and perform communication.

The designated shop terminal part 400 includes a plurality of designated shop terminals that are previously designated for the accumulation of the deozoom margins. In the present embodiment, the designated shop terminal part 400 grouped into a single business area is illustrated for ease of description.

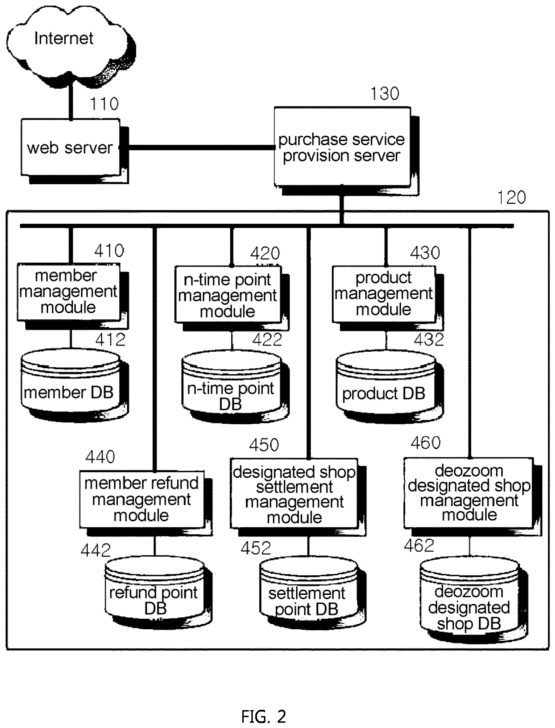

FIG. 2 is a block diagram illustrating the double deozoom margin management system 100 shown in FIG. 1.

Referring to FIGS. 1 and 2, the double deozoom margin management system 100 includes a web server 110, a margin accumulation server 120, and a purchase service provision server 130.

In the present embodiment, the configuration of the double deozoom margin management system 100 is logically divided for ease of description, but is not divided from a hardware perspective.

The web server 110 connects the purchaser terminal 300 and the purchase service provision server 130 to each other over the Internet, and performs the function of providing various web services of the purchase service provision server 130 via a predetermined web page.

The margin accumulation server 120 includes a member management module 410, a member DB 412, a deozoom margin management module 420, a deozoom margin DB 422, a product management module 430, a product DB 432, a member refund management module 440, a refund margin DB 442, a designated shop settlement management module 450, a settlement margin DB 452, a deozoom designated shop management module 460, and a deozoom designated shop DB 462. In the present embodiment, the configuration of the margin accumulation server 120 is logically divided for ease of description, but is not divided from a hardware perspective.

The purchase service provision server 130 performs the function of providing a service adapted to enable a purchaser having joined as a member to purchase a product for the difference, obtained by doing subtraction from a purchaser-owned deozoom margin, via the deozoom margin management module 420 when purchasing a product via the designated shop product management module 430 in response to a request from purchaser having joined as a member from the purchaser terminal.

Furthermore, the purchase service provision server 130 is connected to the member management module 410, the deozoom margin management module 420, the product management module 430, the member refund management module 440, the designated shop settlement management module 450, and the deozoom designated shop management module 460 provided in the margin accumulation server 120. The purchase service provision server 130 performs the function of providing a service adapted to enable a purchaser to purchase a product for the difference obtained by doing subtraction from a purchaser-owned deozoom margin when purchasing the product from the purchaser terminal and a service adapted to convert a cumulative deozoom margin into cash through the appropriate use of the above modules.

At the same time, when the purchaser having joined as a member requests a purchase of a product, the purchase service provision server 130 receives various types of sales information including the sales price of the product, for example, a manufacturer, a product code, product details, a product review, a product inquiry, delivery information, replacement/refund information, per-area offline sales affiliate shop location information, etc., from the product management module 430 and the designated shop management module 460, and enables the information to be displayed on the screen of the corresponding purchaser terminal via the web server 110 so that the purchaser can view the information at a single glance.

Furthermore, the purchase service provision server 130 receives various types of information regarding the accumulation of a deozoom margin for each member, for example, deozoom margin accumulation details, a margin validity period, margin encashment information, margin use event details for each designated shop, etc., from the deozoom margin management module 420, may arrange the information in a simple list form, and may enable the list to be displayed on the screen of the purchaser terminal via the web server 110.

The member management module 410 is connected to the member DB 412, and performs the function of organizing the personal information of a member having joined as a member via the web server 110, for example, a mobile phone number, an e-mail address, a gender, and the member ID and password information of the n-time deozoom margin management system 100, etc., into a database for each member, and storing and managing the database in conjunction with the purchase service provision server 130.

The deozoom margin management module 420 is connected to the deozoom margin DB 422, and performs the function of organizing various types of margin information regarding the accumulation of deozoom margins for products for each region and each designated shop into a database and storing and managing the database and storing and managing the database in conjunction with the purchase service provision server 130.

Furthermore, the deozoom margin management module 420 performs the function of collecting and calculating the deozoom margin accumulation details of individual designated shops for each month and performing set-offs in connection with the differences in the cumulative margin among nationwide designated shops in conjunction with the designated shop settlement management module 450 and the designated shop management module 460.

Furthermore, the deozoom margin management module 420 performs the function of organizing per-member margin accumulation and usage information into a database in conjunction with the member management module 410. In other words, the deozoom margin management module 420 performs the purchase margin settlement function of identifying a corresponding designated shop code or product code in connection with a previous cumulative deozoom margin and subtracting a cost from the deozoom margin when a purchaser purchases a product with the cumulative deozoom margin.

The product management module 430 performs the management operation of connecting with the product DB 432 and registering, modifying, deleting or the like information about products that are sold at affiliate shops. In other words, the product management module 430 performs the function of organizing various types of sales information regarding products for each designated shop into a database and storing and managing the database in conjunction with the purchase service provision server 130.

The member refund management module 440 connects with the refund margin DB 442, and performs the function of organizing per-member margin accumulation and usage information into a database and proving notification of a margin validity period and encashment information via the purchaser terminal for each half year.

Furthermore, the member refund management module 440 performs the function of providing a service adapted to refund an unused deozoom margin before a designated refund date via a designated member account.

According to the present invention, when a customer purchases a product via the Internet or at an offline designated shop, a deozoom margin corresponding to the double of the sales commission business commission of the purchased product is enabled to be accumulated, and a designated product is enabled to be freely purchased by using the cumulative deozoom margin, thereby mutually promoting counterparts among rival businesses or heterogeneous businesses and ultimately maximizing the sales of a corresponding business owner's own shop.

In other words, according to the present invention, the double of a sales margin (which is the same as a business commission or a discount rate) is converted into a margin and the margin is returned to a purchaser.

A deozoom-margin P to be accumulated may be defined by Equation 1 below:

$$[\text{Equation 1}]$$

$$P = A*B*n$$

In this case, A, B, and P are a purchase price, a sales commission, and a deozoom-margin to be accumulated, respectively.

For example, in the case where a sales price is 10,000 won and sales commission is 30%, when these values are substituted into Equation 1 in order to calculate a deozoom-margin to be accumulated, $P = 10,000*0.3*n$. In this case, when n is assumed to 2, 6,000 points are obtained. Accordingly, 6,000 points, which are two times the sales commission, are calculated and accumulated as a deozoom-margin.

Meanwhile, an available deozoom-margin may be defined by Equation 2 below:

$$[\text{Equation 2}]$$

$$P1 = A*B*n$$

In this case, A, B, and P1 are a purchase price, a sales commission, and an available deozoom-margin, respectively.

For example, in the case where a cumulative deozoom-margin is 100,000 points, a sales price is 100,000 won, and a sales commission is 30%, when these values are substituted into Equation 2 in order to calculate an available deozoom-margin, P1 = 100,000 won*0.3*n.

In this case, when n is assumed to be 2, the available deozoom-margin is calculated as 60,000 points. Accordingly, the deozoom-margin available at this time is 60,000 points.

When a purchaser pays 40,000 won by cash or credit card together with the available deozoom-margin of 60,000 points, a sales price of 100,000 won is paid.

Meanwhile, a process for the settlement of a shop owner who has received a deozoom-margin of 60,000 points is described below.

After selling 100,000 won's worth of product, the shop owner needs to pay 30,000 won corresponding to the sales commission of 30% to the n-time deozoom-margin management system 100, and needs to deposit 70,000 won into a business owner. However, since the shop owner has received 40,000 won and 60,000 points, he or she will suffer from a loss of 30,000 won when he or she pays 70,000 won in cash. Accordingly, the double deozoom-margin management system needs to settle up in order to compensate for the loss of 30,000 won.

In this case, the 60,000 points is a margin obtained by accumulating the double of the sales commission of 30,000 won, and is converted into a cash of 30,000 won. At the point of sale, a payment commission has been accumulated in the double deozoom-margin management system from the beginning. Accordingly, when a shop owner's loss of 30,000 won is compensated for by using a cumulative amount of 30,000 won, 70,000 won is deposited, and thus settlement is completed. Furthermore, the cumulative amount becomes the cumulative money of an initial payment commission and future settlement is performed within the range of the cumulative money of the payment commission, so that the operating company does not need to raise a separate fund.

Although the case where the double of a sales commission is accumulated and used has been described, the present invention is not limited to this case, but the triple of a sales commission may be accumulated and used. For example, in order to enable the triple of a sales commission to be accumulated and used, a method of substituting the variable 3 for the variable 2 in Equation 1 or 2 may be applied.

It will be apparent that the case where the triple or more of a deozoom margin is applied is enabled by changing some associated conditions.

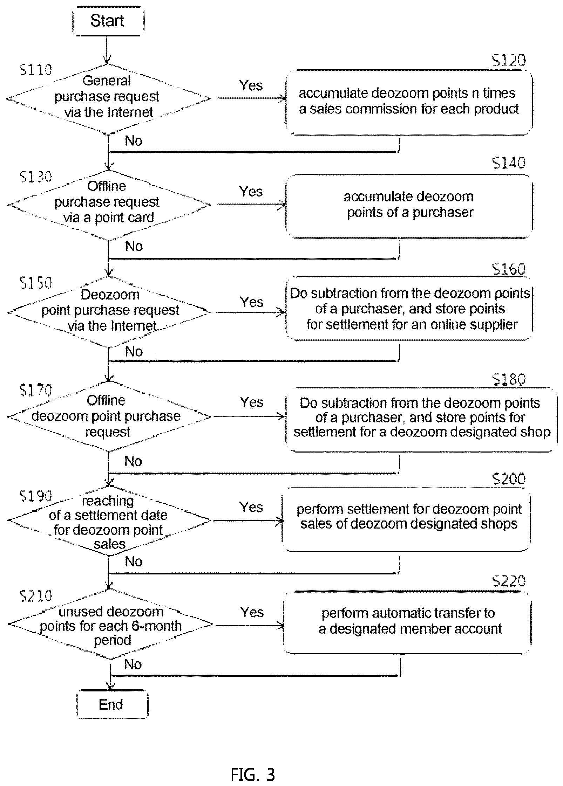

FIG. 3 is a flowchart illustrating a deozoom margin management method according to an embodiment of the present invention.

Referring to FIGS. 1 to 3, it is checked whether a general purchase has been requested over the Internet at step S110.

When it is checked that a general purchase has been requested over the Internet at step S110, the n-time deozoom margin management system 100 identifies a corresponding designated shop via the designated shop management module 460 and accumulates a deozoom margin at step S120.

When it is checked that a general purchase has been requested over the Internet at step S110, it is checked whether an offline purchase via a point card has been requested at step S130. The request for an offline purchase via a point card refers to a member purchasing a product at an offline affiliate shop and then presenting a point card.

When it is checked that an offline purchase via a point card has been requested at step S140, the deozoom margin of a purchaser is stored, and a designated shop settlement margin is stored.

By accumulating the deozoom margin of the purchaser via a point card offline as described above, an effect is achieved in that the purchaser can accumulate a deozoom margin offline and interchangeably uses the deozoom margin, and an effect is achieved in that the designated shop can attract many customers without a separate promotion activity. The effects attributable to the offline application of a deozoom margin are described below.

A customer accumulates a deozoom margin by purchasing a product at a deozoom designated shop, and makes a remainder payment by using the deozoom margin accumulated at the former business when purchasing a product at another deozoom designated shop.

As described above, a customer who has purchased a product at a deozoom designated shop once frequently purchases products at other businesses having joined as deozoom designated shops in order to completely use his or her deozoom margin, and thus a synergic effect in which deozoom designated shops can continuously attract customers is generated. Due to this synergic effect, the effect of inducing general businesses to join as deozoom designated shops is achieved.

When it is checked that an offline purchase via a point card has not been requested at step S130, it is checked whether a deozoom margin purchase has been requested over the Internet at step S150.

When it is checked that a deozoom margin purchase has been requested over the Internet at step S150, subtraction from the deozoom margin of the member is done upon sale of a product at step S160.

When it is checked that an offline deozoom point purchase has been requested at step S170, subtraction from the deozoom points of the purchaser is done and related deozoom points are stored as points for settlement for a deozoom designated shop at step S180. Furthermore, it is checked whether a deozoom margin sales settlement date has been reached at step S190.

When it is checked that a deozoom margin sales settlement date has been reached at step S190, the n-time deozoom margin management system 100 calculates the deozoom margin sales amount of the designated shop and transfers the calculated deozoom margin sales amount to the account or the like of the corresponding designated shop at step S200.

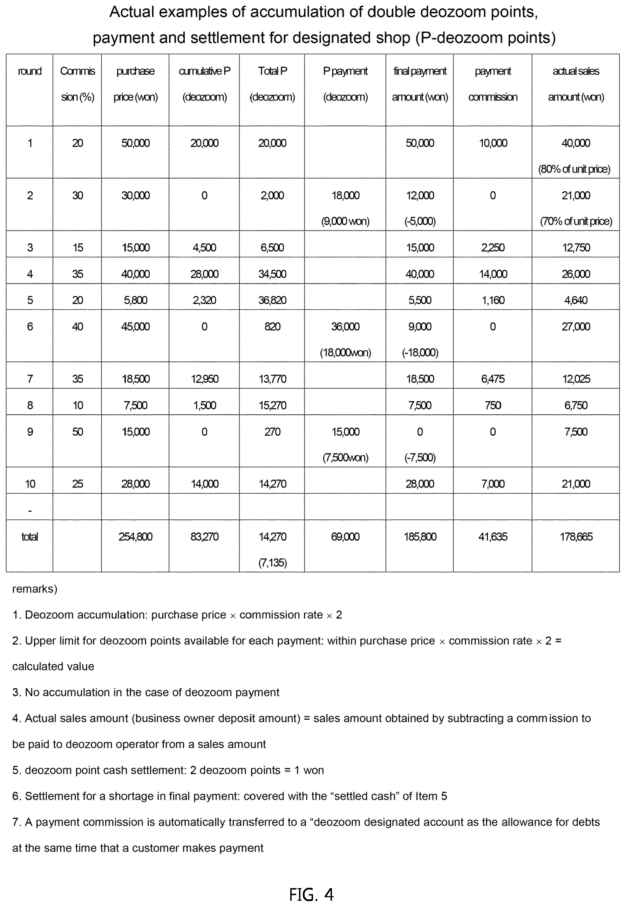

FIG. 4 is a diagram illustrating examples of the accumulation of a deozoom margin, the use of a deozoom margin for payment, and settlement for a designated shop. In this case, the prices and business commissions of all products may be different from each other.

Referring to FIG. 4, when a product for which a commission is 20% and a purchase price is 50,000 won is purchased in a first round, a deozoom margin to be accumulated is 20,000. In this case, a final payment amount that will be paid by a customer is 50,000 won, a payment commission is 10,000 won, and an actual sales amount is 40,000 won corresponding to 80% of the sales price because a commission of 20% is taken into account.

In a second round, when a commission is 30% and a product having a purchase price of 30,000 won is purchased, a customer can purchase the product by using a margin of 18,000 (the double of 9,000 won) and 12,000 won (a shortage). In this case, a remaining margin is 2,000 (20,000-18,000) because part of the cumulative deozoom margin is consumed, and an actual sales amount is 21,000 won corresponding to 70% of the sales price because a commission of 30% is taken into account.

In a third round, in the case where a commission is 15% and a product having a purchase price of 15,000 won is purchased, when a customer finally pays 15,000 won, a deozoom margin to be accumulated for the corresponding customer is 4,5000 (15,000*0.15*2), and a cumulative deozoom margin is 6,500 (2,000+4,500). In this case, a payment commission is 2,250 won (15,000 won*0.15), and an actual sales amount is 12,750 won (15,000 won*0.85).

A customer who purchases a product by using the above-described method can accumulate a deozoom margin corresponding to the double of a sales commission, and can make payment by using the cumulative deozoom margin upon actual purchase. In other words, a deozoom margin which is n times a business commission is accumulated upon normal sales. Furthermore, in the case where a member makes payment by using a deozoom margin, when a setoff is performed in connection with a business commission to be paid by a payment designated shop and a deozoom margin shortage, an overall sales margin is provided to the purchaser, and the operating company performs accurate settlement for a designated shop without loss.

Accordingly, settlement for designated shops with respect to deozoom margins is now described. In FIG. 4, according to the collection and calculation of 10th round based on different prices and different business commissions, an actual sales amount is 178,665 won in the total purchase price of 254,800 won, and a total final payment amount is 185,800 won. In this case, deozoom accumulation points are a margin of 83,270 and cumulative deozoom points after use are a margin of 14,270, and thus 14,270 margin/2 = 7,135 won (2 deozoom points are converted into 1 won) are left when the cumulative deozoom points are converted into cash. Accordingly, the total payment amount of 185,800 won paid by the purchaser is divided into 178,665 won to be paid and a cash of 7,135 won to be further paid. When these are added to each other, 185,800 won (178,665 won+7,135 won) is obtained. As a result, accumulation is performed in the form of cumulative points and the cumulative points can be frequently used in a cross manner, and thus operation is performed such that the convenience of the purchaser is increased and all profits can be returned.

Referring back to FIG. 3, when it is checked that the deozoom margin sales settlement date has not been reached at step S190, it is checked whether the account transfer of a cumulative deozoom margin has been requested at step S210. In the present embodiment, the cumulative deozoom margin may be an unused deozoom margin for the unit of six months.

When it is checked that the account transfer of the cumulative deozoom margin has been requested at step S210, an inquiry is made about the cumulative deozoom margin, i.e., the unused cumulative deozoom margin, and money corresponding to the found unused cumulative deozoom margin is transferred to a member account at step S220.

In the present embodiment, although the case where the account transfer of the cumulative deozoom margin is performed in response to a request from the member (or the purchaser) has been described, the cumulative deozoom margin may be automatically transferred to the account of the corresponding purchaser regardless of a request from the member when a predetermined period has elapsed.

For example, the function of automatically transferring an unused deozoom margin during a period from December 1 of a previous year to May 30 of a current year and from June 1 of the current year to November 30 of the current year to the account of the member via the member refund management module 440 and thus fundamentally blocking the extinction of the unused margin is provided.

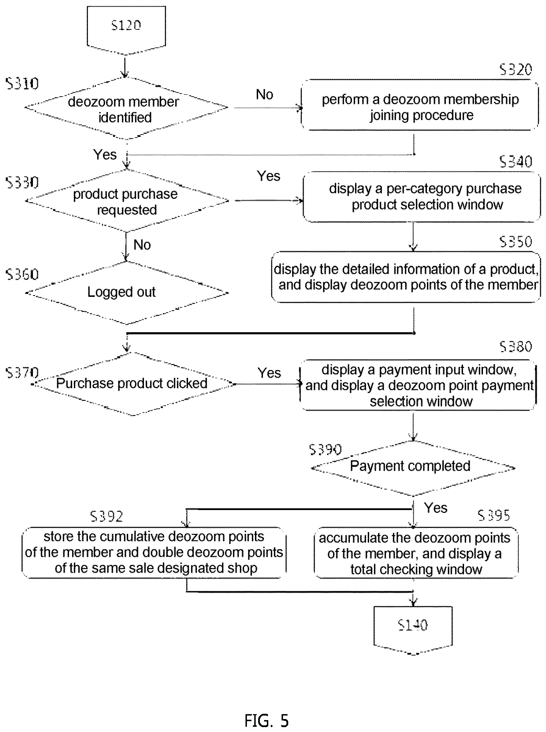

FIG. 5 is a flowchart illustrating the step of issuing and accumulating a deozoom margin when the sale of a product shown in FIG. 3 is made.

Referring to FIG. 5, the purchase service provision server 130 (shown in FIG. 2) checks whether a purchaser is a deozoom member at step S310. The member is registered via a process in which the purchaser accesses a predetermined web page, provided by the web server 110 of the n-time deozoom margin management system 100, via a purchaser terminal and joins as a member. When the purchaser has normally succeeded in login by inputting a member ID and a password, it is checked that he or she is a member.

When it is checked that the purchaser is not a deozoom member at step S310, the purchase service provision server 130 performs a membership joining procedure at step S320.

After it has been checked that the purchaser is a member at step S310 or step S320 has been performed, the purchase service provision server 130 checks whether a product purchase has been requested at step S330.

When it is checked that the product purchase has been requested at step S330, the purchase service provision server 130 displays a product selection window for a per-category product purchase on the screen of the corresponding purchaser terminal at step S340.

When a specific product has been clicked in a product selection window displayed at step S340, the purchase service provision server 130 receives data on the selection of a product to be purchased from the corresponding member terminal via the provided product selection window, displays basic detailed information for the purchase of the selected product on the screen of the corresponding purchaser terminal, and displays a deozoom margin, possessed by the corresponding member, in a deozoom margin information window displayed on the screen of the corresponding purchaser terminal at step S350.

Thereafter, it is checked whether a purchase product has been clicked at step S370.

When it is checked that the purchase product has been clicked at step S370, the purchase service provision server 130 displays a payment input window and a deozoom margin payment selection window on the screen of the corresponding purchaser terminal at step S380.

At step S390, the purchase service provision server 130 checks whether payment has been completed via the payment input window displayed at step S370.

When it is checked that payment has been completed at step S390, the purchase service provision server 130 accumulates the deozoom margin of the member via the deozoom margin management module 420 of the n-time deozoom margin management system 100, and displays an accumulation checking window based on the corresponding accumulation on the screen of the terminal of the corresponding member at step S395.

Additionally, the deozoom margin management module 420 of the n-time deozoom margin management system 100 stores the deozoom margin of a designated sales shop identical to the cumulative deozoom margin in the deozoom margin DB 422 at step S392. In regard to the deozoom margin of the designated sales shop, when a predetermined date has been reached, for example, the last day of each month has been reached, cumulative deozoom margins for each designated shop for each month are converted into a sales amount and then the sales amount is automatically transferred to a designated sales shop account.

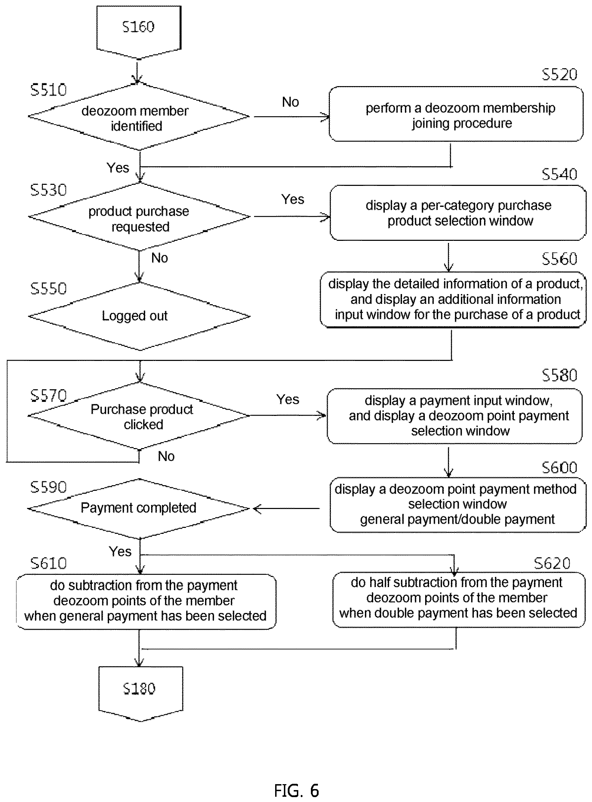

FIG. 6 is a flowchart illustrating the step of doing subtraction from a deozoom margin when the sale of a product shown in FIG. 3 is made.

Referring to FIG. 6, the purchase service provision server 130 checks whether a purchaser is a deozoom member at step S510.

When it is checked that the purchaser is not a deozoom member at step S510, the purchase service provision server 130 performs a membership joining procedure at step S520.

After it has been checked that the purchaser is a deozoom member at step S510 or step S520 has been performed, the purchase service provision server 130 checks whether a deozoom margin product purchase has been requested at step S530.

When it is checked that the deozoom margin product purchase has been requested at step S530, the purchase service provision server 130 displays an input window used for the input of additional information for a deozoom margin purchase product on the screen of a corresponding purchaser terminal at step S540.

Thereafter, at step S560, the detailed information of the product is displayed, and an additional information input window for the purchase of the product is displayed.

Thereafter, at step S570, the purchase service provision server 130 checks whether a specific product has been clicked in the input window displayed at step S560.

When it is checked that the specific product has been clicked at step S570, the purchase service provision server 130 displays a payment input window and a deozoom margin payment selection window on the screen of the corresponding purchaser terminal at step S580.

At step S600, the purchase service provision server 130 displays a deozoom margin payment method selection window to the purchaser. A button used for the selection of general payment, a button used for the selection of double payment, etc. may be displayed in the deozoom margin payment method selection window.

At step S590, the purchase service provision server 130 checks whether payment has been completed via the payment input window displayed at step S580.

When it is checked that the payment has been completed at step S590, the purchase service provision server 130 does subtraction from the payment deozoom margin of the member upon selection of general payment at step S610, and does half subtraction from the payment deozoom margin of the member upon selection of double payment at step S620.

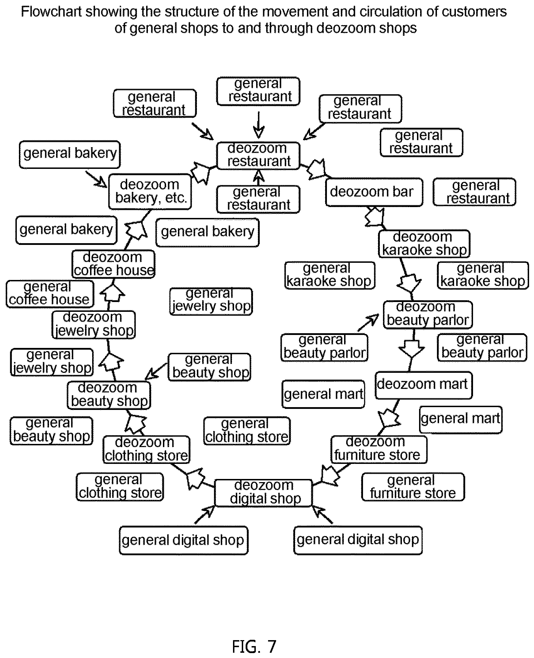

FIG. 7 is a process diagram illustrating the development of changes in the scale of a market attributable to a deozoom margin management method according to the present invention. For ease of description, a flowchart illustrating customer concentration among heterogeneous businesses in a single business area is described.

Referring to FIG. 7, when the customers of a general restaurant, a general bar, etc. within the business area make purchases in a deozoom designated restaurant, a deozoom designated bar, etc., they can receive considerable cumulative deozoom margins, and purchases are concentrated on deozoom designated shops in order to immediately use the cumulative deozoom margins.

Furthermore, the degree of concentration of the purchases of customers is further increased due to the convenience of the use of deozoom margins based on online and offline compatibility, and thus a strong conveyer cartel construction effect adapted to concentrate customers on deozoom designated shops according to market logic is achieved.

Accordingly, deozoom designated shops among heterogeneous businesses throughout the country can obtain highly efficient promotion and marketing effects adapted to send customers to each other according to the present double deozoom system. Accordingly, the number of customers using general shops will be gradually decreased, and the decreased number of customers will be moved to deozoom designated shops.

Furthermore, the customer using the deozoom designated shop has an advantage in that he or she can accumulate a deozoom margin without sticking to only a specific shop, and the deozoom designated shop has an advantage in that the number of customers increases and sales rise.

While the preferred embodiments of the double deozoom margin management method and system have been described above, it will be apparent to those skilled in the art that the present invention may be modified and varied in various manners without departing from the spirit and scope of the present invention set forth in the attached claims.

## Claims

1. A cash payment linking method based on accumulation of a double sales margin, the cash payment method comprising:

   when a general purchase has been requested, identifying a sales commission rate agreed among a plurality of deozoom designated shops and an n-time deozoom system operating company in advance, wherein the deozoom designated shops are designated shops that have agreed that n-time deozoom margins are accumulated and designated products can be purchased using the deozoom margins among them and that have been each designated to monopolistically use a double deozoom system within an identical business area;

   identifying, by a deozoom margin management module, an identification code of a corresponding deozoom designated shop, and then issuing and accumulating, by the deozoom margin management module, a deozoom margin when a product has been purchased;

   when a deozoom margin purchase has been requested, doing, by the deozoom margin management module, subtraction from a deozoom margin of a member when the product has been purchased;

   wherein the double deozoom margin of the purchaser is calculated and accumulated according to Equation 1;

   wherein cumulative deozoom points are exchanged with cash at a one-to-one exchange rate upon cash payment;

   wherein the cumulative deozoom points are converted into cash at a two-to-one conversion rate when the cumulative deozoom points are converted into cash and then returned to each vendor;

   wherein a loss of each vendor is compensated for by using a payment commission of a deozoom system operating company; and

   wherein an upper limit for deozoom points that can be used when the purchaser makes one payment is determined according to Equation 2, and there is no accumulation when payment is made using deozoom points:

```
P = A*B*2 ----------------- Equation 1
```

the upper limit for deozoom points available for each payment: within

```
P = A*B*2 = calculated value ---------------
```

Equation 2

(where A, B and P are a purchase price, a sales commission, and a double deozoom-margin to be accumulated, respectively).

2. The cash payment linking method of claim 1, further comprising, when an offline purchase via a point card is requested, storing, by the deozoom margin management module, a deozoom margin of the purchaser, and storing, by the deozoom margin management module, a deozoom margin for settlement for the deozoom designated shop.

3. The cash payment linking method of claim 1, wherein doing the subtraction from the deozoom margin comprises:

when a deozoom margin product purchase is requested, displaying an input window, used for input of additional information regarding a deozoom margin purchase product, on a screen of the corresponding purchaser terminal; when a specific product has been clicked in the input window, displaying a payment input window on the screen of the corresponding purchaser terminal; and when payment has been completed, doing subtraction from a deozoom margin of the member.

4. The cash payment linking method of claim 1, further comprising, when a deozoom margin sales settlement date has been reached, calculating, by the purchase service provision server, a deozoom margin sales amount of the deozoom designated shop in conjunction with a deozoom management module, and transferring, by the purchase service provision server, the deozoom margin sales amount to the corresponding deozoom designated shop in conjunction with the deozoom management module.

5. The cash payment linking method of claim 1, further comprising making, by the purchase service provision server, an inquiry about a cumulative deozoom margin in conjunction with a member refund management module, and transferring, by the purchase service provision server, an unused cumulative deozoom margin of the purchaser to an account of the purchaser in conjunction with the member refund management module.

6. The cash payment linking method of claim 5, wherein the inquiry about the cumulative deozoom margin is made in response to a request from the purchaser.

7. The cash payment linking method of claim 5, wherein the inquiry about the cumulative deozoom margin is made when a set settlement date has been reached.

8. The cash payment linking method of claim 1, wherein issuing and accumulating, by the purchase service provision server, the deozoom margin at an agreed sales commission rate when the product has been purchased comprises:

when a product purchase has been requested, displaying a product selection window for a purchase of a product for each category on a screen of the corresponding purchaser terminal; when a specific product has been clicked in the product selection window, displaying detailed information of the product on the screen of the corresponding purchaser terminal, and displaying a deozoom margin, possessed by the member, on the screen of the corresponding purchaser terminal; displaying a payment input window on the screen of the corresponding purchaser terminal; and when a payment has been completed, accumulating a deozoom margin of the member, and displaying an accumulation checking window on the screen of the corresponding purchaser terminal.

9. The cash payment linking method of claim 8, further comprising, when the payment has been completed, storing, by the deozoom management module, a deozoom margin of a designated sales shop corresponding to a cumulative deozoom margin.

**10.** A cash payment linking system based on accumulation of a double sales margin, the cash payment system comprising:

a web server connected to an Internet;
a deozoom margin accumulation server configured to accumulate deozoom margins among deozoom designated shops, wherein the deozoom designated shops are designated shops that have agreed that deozoom margins are accumulated and designated products can be purchased by using the deozoom margins among them and that have joined as members in order to pursue cross promotion and increases in sales among the deozoom designated shops; and
a purchase service provision server configured to:

(i) when a general purchase has been requested, identify a code of a corresponding designated shop or an identification code of a product from a per-member database, stored via a member management module, in conjunction with the deozoom margin accumulation server;
(ii) when the product has been purchased, issue and accumulate a previously agreed deozoom margin;
(iii) when an offline purchase via a point card has been requested, store a deozoom margin of a purchaser, and store a deozoom margin for settlement for the deozoom designated shop; and
(iv) when a deozoom margin purchase has been requested, do subtraction from a deozoom margin of a member after the product has been purchased;

wherein the double deozoom margin of the purchaser is calculated and accumulated according to Equation 1;
wherein cumulative deozoom points are exchanged with cash at a one-to-one exchange rate upon cash payment;
wherein the cumulative deozoom points are converted into cash at a two-to-one conversion rate when the cumulative deozoom points are converted into cash and then returned to each vendor;
wherein a loss of each vendor is compensated for by using a payment commission of a deozoom system operating company; and
wherein an upper limit for deozoom points that can be used when the purchaser makes one payment is determined according to Equation 2, and there is no accumulation when payment is made using deozoom points:

$$P = A*B*2 \text{ ---------------- Equation 1}$$

(where A, B and P are a purchase price, a sales commission, and a double deozoom-margin to be accumulated, respectively)
the upper limit for deozoom points available for each payment: within P = A*B*2 = calculated value-Equation 2.

**11.** The cash payment linking system of claim 11, wherein the purchase service provision server, when a deozoom margin sales settlement date has been reached, calculates a deozoom margin sales amount of the deozoom designated shop and transfers the deozoom margin sales amount to the corresponding deozoom designated shop.

**12.** The cash payment linking system of claim 10, wherein the purchase service provision server makes an inquiry about a cumulative deozoom margin, and transfers an unused cumulative deozoom margin of the purchaser to an account of the purchaser.

**13.** The cash payment linking system of claim 10, wherein the deozoom margin accumulation server comprises a member management module configured to organize personal information of a member, having joined as a member via the web server, into a database for each member and store and manage this database in conjunction with the purchase service provision server.

**14.** The cash payment linking system of claim 10, wherein the deozoom margin accumulation server comprises a deozoom margin management module configured to organize margin information regarding deozoom margin accumulation for products into a database for each online or offline deozoom designated shop and store and manage this database in conjunction with the purchase service provision server.

**15.** The cash payment linking system of claim 10, wherein the deozoom margin accumulation server comprises a product management module configured to organize sales information regarding products into a database for each online or offline deozoom designated shop and store and manage this database in conjunction with the purchase service provision server.

**16.** The cash payment linking system of claim 10, wherein the deozoom margin accumulation server comprises a designated shop management module configured to designate any one of deozoom designated shops for each online/offline field, for each business, for each item, for each price, or for each area for deozoom margin accumulation and manage the designation.

**17.** The cash payment linking system of claim 10, wherein the deozoom margin accumulation server comprises a product management module configured to perform a function of registering, modifying, and deleting information about products that are being sold at deozoom designated shops.

**18.** The cash payment linking system of claim 10, wherein the deozoom margin accumulation server comprises a deozoom margin management module configured to enable a margin corresponding to a sales commission to be accumulated and enable a double of a remaining margin to be paid upon margin payment.

deozoom
point card

purchaser
PC terminal

purchaser
mobile terminal

300

n-time deozoom point
management system

100

200

www.deozoom.com

Internet

400

offline deozoom
designated shop terminal

offline deozoom
designated shop terminal

deozoom
point card

deozoom
point card

deozoom
point card

deozoom
point card

FIG. 1

FIG. 2

Start

S110 — General purchase request via the Internet — Yes — S120 accumulate deozoom points n times a sales commission for each product

No

S130 — Offline purchase request via a point card — Yes — S140 accumulate deozoom points of a purchaser

No

S150 — Deozoom point purchase request via the Internet — Yes — S160 Do subtraction from the deozoom points of a purchaser, and store points for settlement for an online supplier

No

S170 — Offline deozoom point purchase request — Yes — S180 Do subtraction from the deozoom points of a purchaser, and store points for settlement for a deozoom designated shop

No

S190 — reaching of a settlement date for deozoom point sales — Yes — S200 perform settlement for deozoom point sales of deozoom designated shops

No

S210 — unused deozoom points for each 6-month period — Yes — S220 perform automatic transfer to a designated member account

No

End

FIG. 3

## Actual examples of accumulation of double deozoom points, payment and settlement for designated shop (P-deozoom points)

| round | Commis sion (%) | purchase price (won) | cumulative P (deozoom) | Total P (deozoom) | P payment (deozoom) | final payment amount (won) | payment commission | actual sales amount (won) |
|---|---|---|---|---|---|---|---|---|
| 1 | 20 | 50,000 | 20,000 | 20,000 | | 50,000 | 10,000 | 40,000 (80% of unit price) |
| 2 | 30 | 30,000 | 0 | 2,000 | 18,000 (9,000 won) | 12,000 (-5,000) | 0 | 21,000 (70% of unit price) |
| 3 | 15 | 15,000 | 4,500 | 6,500 | | 15,000 | 2,250 | 12,750 |
| 4 | 35 | 40,000 | 28,000 | 34,500 | | 40,000 | 14,000 | 26,000 |
| 5 | 20 | 5,800 | 2,320 | 36,820 | | 5,500 | 1,160 | 4,640 |
| 6 | 40 | 45,000 | 0 | 820 | 36,000 (18,000 won) | 9,000 (-18,000) | 0 | 27,000 |
| 7 | 35 | 18,500 | 12,950 | 13,770 | | 18,500 | 6,475 | 12,025 |
| 8 | 10 | 7,500 | 1,500 | 15,270 | | 7,500 | 750 | 6,750 |
| 9 | 50 | 15,000 | 0 | 270 | 15,000 (7,500 won) | 0 (-7,500) | 0 | 7,500 |
| 10 | 25 | 28,000 | 14,000 | 14,270 | | 28,000 | 7,000 | 21,000 |
| - | | | | | | | | |
| total | | 254,800 | 83,270 | 14,270 (7,135) | 69,000 | 185,800 | 41,635 | 178,665 |

remarks)

1. Deozoom accumulation: purchase price × commission rate × 2

2. Upper limit for deozoom points available for each payment: within purchase price × commission rate × 2 = calculated value

3. No accumulation in the case of deozoom payment

4. Actual sales amount (business owner deposit amount) = sales amount obtained by subtracting a commission to be paid to deozoom operator from a sales amount

5. deozoom point cash settlement: 2 deozoom points = 1 won

6. Settlement for a shortage in final payment: covered with the "settled cash" of Item 5

7. A payment commission is automatically transferred to a "deozoom designated account as the allowance for debts at the same time that a customer makes payment

## FIG. 4

S120

S310
deozoom member identified

No → S320
perform a deozoom membership joining procedure

Yes ↓

S330
product purchase requested

Yes → S340
display a per-category purchase product selection window

↓ S350
display the detailed information of a product, and display deozoom points of the member

No ↓

S360
Logged out

S370
Purchase product clicked

Yes → S380
display a payment input window, and display a deozoom point payment selection window

S390
Payment completed

Yes

S392
store the cumulative deozoom points of the member and double deozoom points of the same sale designated shop

S395
accumulate the deozoom points of the member, and display a total checking window

S140

FIG. 5

S160

S510 deozoom member identified

No → S520 perform a deozoom membership joining procedure

Yes ↓

S530 product purchase requested

Yes → S540 display a per-category purchase product selection window

↓ S560 display the detailed information of a product, and display an additional information input window for the purchase of a product

No ↓

S550 Logged out

S570 Purchase product clicked

Yes → S580 display a payment input window, and display a deozoom point payment selection window

No

↓ S600 display a deozoom point payment method selection window general payment/double payment

S590 Payment completed

Yes ↓

S610 do subtraction from the payment deozoom points of the member when general payment has been selected

S620 do half subtraction from the payment deozoom points of the member when double payment has been selected

S180

FIG. 6

Flowchart showing the structure of the movement and circulation of customers
of general shops to and through deozoom shops

FIG. 7

**INTERNATIONAL SEARCH REPORT**

International application No.

**PCT/KR2015/006457**

A. CLASSIFICATION OF SUBJECT MATTER

*G06Q 30/02(2012.01)i*

According to International Patent Classification (IPC) or to both national classification and IPC

B. FIELDS SEARCHED

Minimum documentation searched (classification system followed by classification symbols)

G06Q 30/02; G06Q 50/00; G06Q 20/26; G06Q 30/00; G06Q 30/00; G06Q 40/02; G06Q 20/00; G06Q 30/06

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: sell, commission, double, point

C. DOCUMENTS CONSIDERED TO BE RELEVANT

| Category* | Citation of document, with indication, where appropriate, of the relevant passages | Relevant to claim No. |
|---|---|---|
| Y | KR 10-1243971 B1 (KIM, Hak - Jung et al.) 15 March 2013 <br> "Reference cited in the present application" <br> See abstract and claims 1-20. | 1-18 |
| Y | KR 10-2012-0038819 A (OH, Wan Sue) 24 April 2012 <br> See abstract and paragraphs [0047]-[0051]. | 1-18 |
| Y | KR 10-2006-0107492 A (KIM, You - Jung) 13 October 2006 <br> See abstract and figures 3-5. | 1-18 |
| A | KR 10-2012-0087245 A (JO, Han) 07 August 2012 <br> See abstract. | 1-18 |
| A | KR 10-2014-0061597 A (DONG-A UNIVERSITY RESEARCH FOUNDATION FOR INDUSTRY-ACADEMY COOPERATION) 22 May 2014 <br> See abstract. | 1-18 |
| A | KR 10-0592601 B1 (CHA, Heui Jang) 28 June 2006 <br> See pages 3-4. | 1-18 |

☐ Further documents are listed in the continuation of Box C.    ☒ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 10 SEPTEMBER 2015 (10.09.2015) | **11 SEPTEMBER 2015 (11.09.2015)** |

| Name and mailing address of the ISA/KR | Authorized officer |
|---|---|
| Korean Intellectual Property Office <br> Government Complex-Daejeon, 189 Seonsa-ro, Daejeon 302-701, Republic of Korea <br> Facsimile No. 82-42-472-7140 | Telephone No. |

Form PCT/ISA/210 (second sheet) (January 2015)

INTERNATIONAL SEARCH REPORT
Information on patent family members

International application No.

**PCT/KR2015/006457**

| Patent document cited in search report | Publication date | Patent family member | Publication date |
|---|---|---|---|
| KR 10-1243971 B1 | 15/03/2013 | NONE | |
| KR 10-2012-0038819 A | 24/04/2012 | NONE | |
| KR 10-2006-0107492 A | 13/10/2006 | KR 10-2011-0106258 A<br>KR 10-2011-0106259 A<br>KR 10-2012-0126043 A | 28/09/2011<br>28/09/2011<br>20/11/2012 |
| KR 10-2012-0087245 A | 07/08/2012 | NONE | |
| KR 10-2014-0061597 A | 22/05/2014 | NONE | |
| KR 10-0592601 B1 | 28/06/2006 | NONE | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101243971
- KR 20110003903
- KR 20090137349
- KR 20040082146
- KR 100840347
- KR 100768747
- KR 100915668